# EUROPEAN PATENT APPLICATION

(11) **EP 1 613 100 A2**
(43) Date of publication of application: **04.01.2006**
(21) Application number: 05105358.5
(22) Date of filing: 17.06.2005
(51) Int. Cl.: H04N 9/31

(54) **Projection image display apparatus**

(30) Priority: 30.06.2004 JP 2004192937
(71) Applicant: KABUSHIKI KAISHA TOSHIBA, Tokyo 105-8001 (JP)
(72) Inventor: Kurihara, Nobuyuki, c/o Toshiba Corporation, Minato-ku, 105-8001, Tokyo (JP)
(74) Representative: Henkel, Feiler & Hänzel

(57) **Abstract**

A projection image display apparatus of the present invention has a light source (11), a color wheel (13) to transmit light from the light source, a digital micromirror device (DMD) (16) to which color light transmitted through the color wheel is applied, a screen (18) onto which video light from the DMD is projected through a projection lens, a power supply control unit (60) to control a supply voltage of the light source in a completely on state, completely off state and low-power standby state, and an informing mechanism (91, 92) to inform the controlled states of the power supply control unit, wherein the operation states of the light source can be easily and externally recognized.

## Description

The present invention relates to a projection image display apparatus using an optical space modulation element such as a digital micromirror device (DMD).

There is a projection image display apparatus using a digital micromirror device (DMD) as a space modulation element.

This image display apparatus selectively generates R, G and B video light by turning red (R), green (G) and blue (B) filters of a color wheel provided in a front stage of a light source, and obtains a projection image by reflecting the light for each color on the DMD.

The R, G and B light transmitted through the R, G and B filters is applied to the respective reflection surfaces of DMD. The DMD is driven by the R, G and B video signals in synchronization with the application of the R, G and B light. The R, G and B video light reflected from the DMD is magnified and projected onto a screen through a projection lens.

In such a projection image display apparatus, a discharge lamp is often used as a light source. Thus, when a power supply is turned on again after once turned off, it takes certain time (waiting time) for the lamp to stabilize the illuminance of light and color temperature.

As a well-known means of reducing the waiting time, there is a backup lighting system (a residual heat system) which supplies a lamp with certain power (a heater current (ballast)) even in a standby state. This state is generally called low-power shutdown (LPS). When a main power supply is turned on from this waiting state, the lamp restart speed is increased. US Patent Publication No. 5,134,491 describes an example of stopping a ballast lamp lighting circuit with a certain time delay after a main power supply is turned off.

Most projection image display apparatus are not provided with a mechanism to permit the user to easily and externally confirm that power is supplied in a standby state. Thus, the user may misunderstand that power is completely turned off even in a standby state (power is not completely turned off in a backup lighting system (a residual heat system). In this case, the user may open the cover of an image display apparatus for maintenance, and may touch an energized part or a light source generating much volume of heat.

According to an aspect of the present invention, there is provided a projection image display apparatus comprising:
a light source;
a modulation element which receives light from the light source and emits video light modulated by a video signal having a predetermined color space;
a screen onto which video light from the optical space modulation element is projected through a projection lens;
a power supply unit which controls a supply voltage of the light source in a completely on state, completely off state, and low-power standby state; and
an informing mechanism which informs the controlled states of the light source.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a schematic illustration showing an example of a projection image display apparatus applicable to an embodiment of the present invention;
FIG. 2 is a timing chart explaining an example of operation of the projection image display apparatus shown in FIG. 1; and
FIG. 3 is a table explaining an example of control of a display unit of the projection image display apparatus shown in FIG. 1.

Hereinafter preferred embodiments of the present invention will be explained in detail with reference to the accompanying drawings.

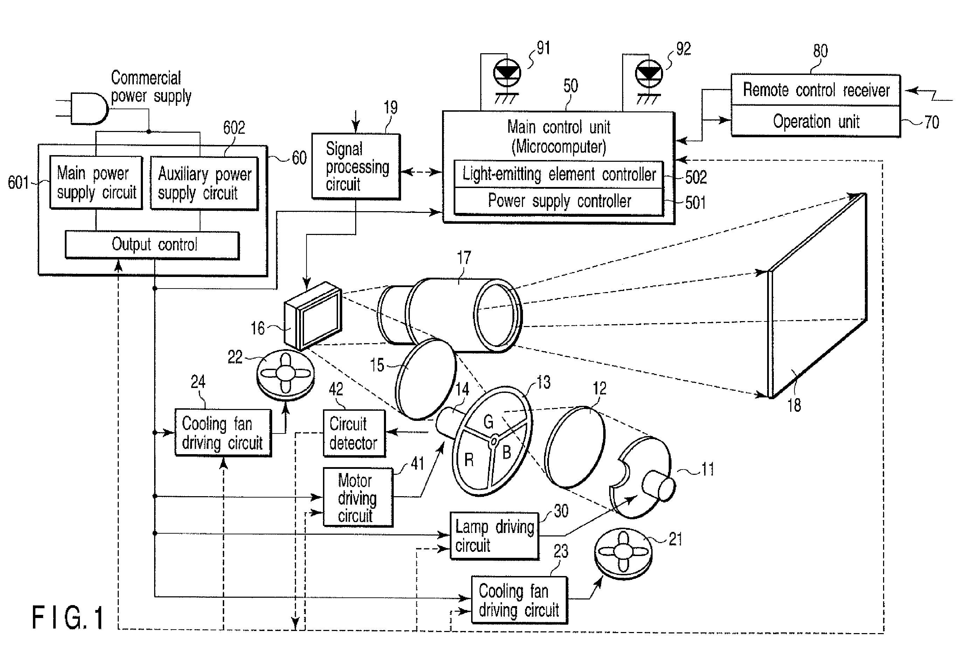

FIG. 1 shows an example of a projection image display apparatus applicable to an embodiment of the present invention.

The projection image display apparatus shown in FIG. 1 uses a digital micromirror device (DMD) as an optical space modulation element.

While light emitted from a light source 11 passes through a lens 12 and filters R (red), G (green) and B (blue). The light source 11 uses a xenon lamp, for example.

A color wheel 13 is turned by a motor 14 at a predetermined speed. Therefore, light from the light source 11 is given a predetermined color when passing through respective filters R (red), G (green) and B (blue) of the color wheel 13.

The light given predetermined colors after passing through the color wheel 13 is applied to an image forming surface of a digital micromirror device (DMD). The image forming surface is provided with micromirrors arranged like a matrix, for example.

The micromirrors can reflect the light given the colors R, G and B in the color wheel 13 at a predetermined timing in the direction toward or away from a projection lens system 17, by controlling the inclination of each mirror. Therefore, when each micromirror is given a reflecting direction toward the lens system 17 according to a video signal, video light (R, G and B) corresponding to a video signal sequentially enters the lens system 17. The R, G and B video light emitted from the projection lens system 17 is projected onto a screen 18.

A signal processing circuit 19 supplies a DMD 16 with video signals corresponding to R, G and B at certain time intervals. In this time, a motor 14 is controlled so that the R, G and B color filters of the color wheel 13 are placed in the optical path in synchronization with the video signal corresponding to R, G and B. Therefore, the micromirrors of the DMD 16 output video light for R, G and B at certain time intervals.

In this image display apparatus, there are two fans 21 and 22 for cooling the light source 11 and DMD 16, respectively. The fans 21 and 22 are controlled by fan driving circuits 23 and 24, respectively. The fan driving circuits 23 and 24 control the rotation speed and time of the fans 21 and 22, based on the control information (instructions) from a main control unit 50.

The main control unit 50 sets the on/off states and standby state of the light source 11 for a lamp driving circuit 30. This control will be described later.

The main control unit 50 gives the motor driving circuit 41 instructions to set the rotation frequency (rotational speed) and phase of the motor 14 to drive and turn the color wheel 13. The rotation of the motor 14 is detected by a rotation detector 42, and the detected information is fed back to the main control unit 50.

The main control unit 50 also controls the output timing of a video output signal output from the signal processing circuit 19, so that the positions of the color filters R, G and B of the color wheel 13 (which color is given to the light from the lamp 11) are synchronized with the R, G and B video signals output from the signal processing circuit 19 at certain time intervals.

The main control unit 50 can control the operations (power output state) of a main power supply circuit 601 of a power supply unit 60 and an auxiliary power supply circuit 602. The power supply unit 60 is connected to the commercial power supply.

The state of the image display apparatus is determined by a switching operation of an operation unit 70 connected to the main control unit 50, or by a signal input from a not-shown remote control terminal and received by a remote control receiver 80.

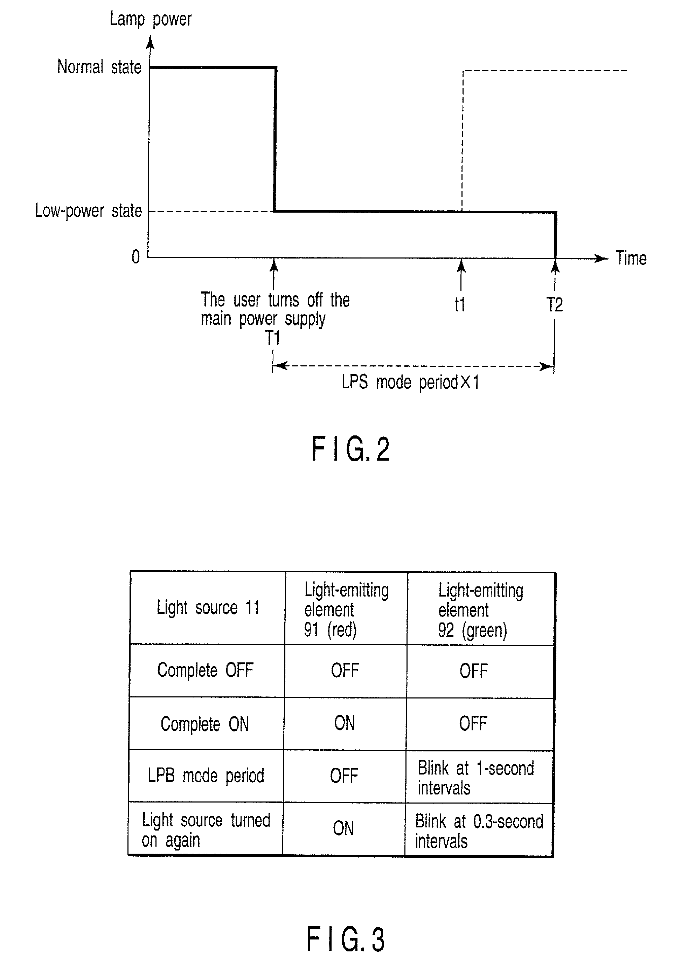

The main control unit 50 is connected with display elements 91 and 92, which enable the user to determine whether the user can recognize the states, standby or completely off, of the image display apparatus, especially the light source (lamp) 11. The display elements 91 and 92 are lit by the main control unit 50 in several patterns explained later with reference to FIG. 3.

FIG. 2 shows the relationship between the power supplied to the light source (lamp) and time. The horizontal axis indicates the time, and the vertical axis indicates the power applied to the lamp.

The main control unit has a power supply controller 501, which controls the supply voltage applied to the light source 11 through the lamp driving circuit 30. This includes whether the light source is completely turned on/off or in the standby state (low-power state or residual heat mode (or backup lighting).

In the completely on state, power applied to the lamp (input voltage) is usually a rated value.

For example, when the power is turned off by the user, a low-power state or a residual heat mode (or backup lighting) is set for a period from time T1 to T2. This state is called a low-power shutdown (LPS) mode. The standby state (LPS) turns to the completely off state after a predetermined period X1 (at time T2).

Conversely, when the main power supply is turned on again by the user within the period X1, the light from the light source 11 rises smoothly, and the light source is completely turned on within a very short time (indicated by a dotted line in FIG. 2).

During the LPS mode, the fan 21 for cooling the light source 11 is held on. Therefore, after the period X1 elapses, the light source 11 is sufficiently cooled. The length of the LPS mode is optionally set by the power supply controller 501 of the main control unit 50.

In the above case, the rotation speed of the fan 21 is optimized based on the length of the period X1. The length of the period X1 may also be changed according to a time frame of a day, or set to a desired length by the user.

FIG. 3 shows the relationship between the lighting timing of two (red and green) light-emitting elements and the operation states of the image display apparatus. The light-emitting element lighting timing (the lighting pattern) shown in FIG. 3 is just an example, and any patterns can be used at least if the LPS period can be informed to the user.

The lighting patterns (lighting time) of the light-emitting elements 91 and 92 are controlled by the light-emitting element controller 502. Hereinafter an example of lighting pattern will be explained with reference to FIG. 3.

When the main power supply of the power supply unit 60 is turned off and the light source 11 is completely turned off, the light-emitting elements 91 and 92 are also turned off. When the main power supply is turned on and the light source 11 is completely turned on, only the light-emitting element 91 is turned on.

During the LPS mode, the light-emitting element 91 turns off, but the light-emitting element 92 blinks at one-second intervals. Therefore, the user can easily recognize that the image display apparatus is in the standby state.

When the main power supply is turned on during the LPS mode (the main power supply is turned on at the time t1 in FIG. 2), the light-emitting element 91 lights continuously and the light-emitting element 92 turns on at every predetermined period (0.3 seconds) (the light-emitting element 92 blinks).

When the light from the light source 11 is stabilized, the light source is completely turned on and only the light-emitting element 91 turns on.

In the above informing mechanism (display means), the red light-emitting element 91 indicates on/off of the main power supply, and the blue light-emitting element 92 warns of the LPS mode (standby state) and lighting again in the LPS mode.

As described above, the informing mechanism of the present invention can inform the user of the states of the image display apparatus, especially the state of the light source heated to a high temperature while being energized in the standby state, by combining the lighting and blinking of the least necessary number of light-emitting elements.

A projection image display apparatus using a color wheel and DMD has been described hereinabove. The invention is applicable also to a projection image display apparatus using a liquid crystal. Namely, in an apparatus which applies light from a light source to a liquid crystal panel, and projects reflected light from a liquid crystal panel onto a screen through a projection lens, the above-mentioned lamp can be applied to a member driving in LPS or normal mode.

According to the present invention, the power control states of a light source of an apparatus can be easily and externally recognized, increasing safety and reliability.

## Claims

1. A projection image display apparatus **characterized by** comprising:
a light source (11);
a modulation element (16) which receives light from the light source and emits video light modulated by a video signal having a predetermined color space;
a screen (18) on which video light from the optical space modulation element is projected through a projection lens;
a power supply unit (60) which controls a supply voltage of the light source in a completely on state, completely off state, and low-power standby state; and
an informing mechanism (50, 60) which informs the controlled states of the light source.

2. The projection image display apparatus according to claim 1, **characterized in that** the informing mechanism (50, 60) includes two light-emitting elements, which are controlled so that only one light-emitting element turns on when the light source is in the completely on state, two light-emitting elements turn off when the light source is in the completely off state, and only the other light-emitting element blinks when the light source is in the standby state.

3. The projection image display apparatus according to claim 2, **characterized in that** said one light-emitting element (91, 92) and the other light-emitting element (91, 92) are different in emission light color.

4. The projection image display apparatus according to claim 2, **characterized in that** the power supply control (50, 501) of the light source includes a means of driving the light source in the low-power state, and turns off completely the light source after a preset time elapses, when a main power supply circuit of a power supply unit is turned off and the light source is powered by an auxiliary power supply circuit.

5. The projection image display apparatus according to claim 4, **characterized in that** the control means (50, 501) turns on said one light-emitting element and turns off the other light-emitting element after blinking temporarily, when the main power supply circuit is turned on again in the low-power state.

6. The projection image display apparatus according to claim 5, **characterized by** further comprising a fan (21) for cooling the light source in the low-power state.

7. A projection image display apparatus **characterized by** comprising:
a light source (11);
a color wheel which gives a predetermined color to light from the light source (13);
a digital micromirror device (16) to which light transmitted through the color wheel (given a predetermined color) is applied;
a screen (18) onto which video light from the digital micromirror device is projected through a projection lens;
a power supply unit (60) which controls a supply voltage of the light source in a completely on state, completely off state, and low-power standby state; and
a display means (50, 91, 92)which discriminates and displays power controlled states of the light source.
